# EUROPEAN PATENT SPECIFICATION

(11) **EP 2 998 882 B1**
(45) Date of publication and mention of the grant of the patent: **18.09.2019**
(21) Application number: 14185583.3
(22) Date of filing: 19.09.2014
(51) Int. Cl.: G06F 16/2453

(54) **Method for reducing a selection result set of a database query**
Verfahren zur Reduzierung eines Auswahlergebnissatzes einer Datenbankabfrage
Procédé pour réduire une sélection d'ensemble de résultats d'une interrogation de base de données

(43) Date of publication of application: 23.03.2016
(73) Proprietor: Huawei Technologies Co., Ltd., Longgang District Shenzhen, Guangdong 518129 (CN)
(72) Inventor: Sivakumar, Kalyan, 80992 Munich (DE); Ramamurthi, Prasanna Venkatesh, 80992 Munich (DE); Wolski, Antoni, 80992 Munich (DE)
(74) Representative: Maiwald Patent- und Rechtsanwaltsgesellschaft mbH

(56) References cited:
- IHAB F. ILYAS ET AL: "A survey of top- k query processing techniques in relational database systems", ACM COMPUTING SURVEYS, vol. 40, no. 4, 1 October 2008 (2008-10-01), pages 1-58, XP055129033, ISSN: 0360-0300, DOI: 10.1145/1391729.1391730

## Description

### TECHNICAL FIELD

The present disclosure relates to a method for reducing a selection result set of a database query, in particular with respect to parallel Top-N selection execution in column-store databases. The disclosure further relates to a multi-core processor executing such method.

### BACKGROUND

In the technical field of databases, Top-N selection queries limit (reduce) the cardinality of the sorted result set to a given number. In other words, they return first N rows of the full sorted result set. For example, in SQL, a Top-N query can be expressed in the following way: "SELECT c FROM t WHERE a>10 AND b<50 ORDER BY d LIMIT 2", where a and *b* are called filter columns and *d* is called a sort column. The query will return two rows having the values of the projection column *c*, corresponding to the result set rows that have the highest values of *d* in the result set. Such a result set is called a reduced result set. Top-N queries are important in analytical processing where often only highly significant results are needed. The technical challenge of Top-N queries is that the full result set size can be orders of magnitude larger than the number of requested rows. It is not uncommon to request only few (e.g. up to ten) rows of the full result set having the size of millions of rows. The goal of the Top-N methods is to avoid materializing the full result set. Only top rows are to be materialized. This is to save both the processing resources and memory.

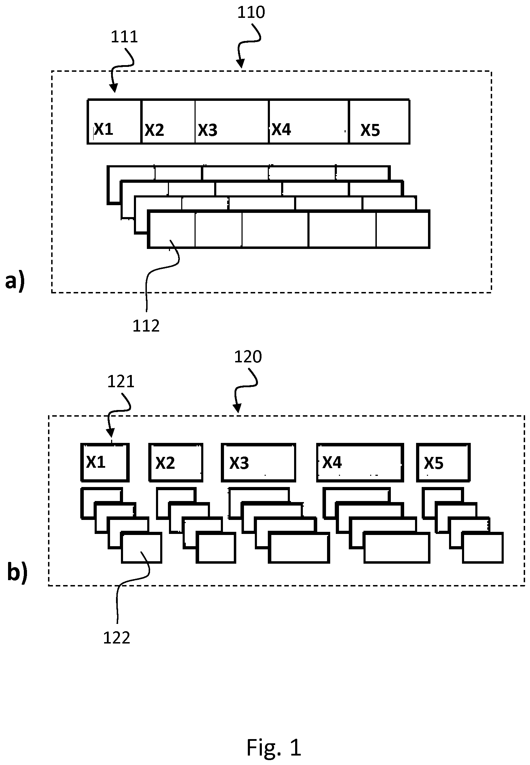

Another challenge is related to the fact that analytical databases are columnar databases (column stores). The difference between a traditional row-store database and a column-store database is illustrated in Fig. 1 a) and b) where a five-column table is shown as implemented as a row-store table 110 (Fig. 1a) and a column-store table 120 (Fig. 1b). In a row store, columns 111 are implemented in such a way that the column values 112 are stored adjacently, in a row. On the other hand, the column values 122 of the column store are stored adjacently to other values of the same column 121. The columnar storage is used in analytical databases because it speeds up query condition (predicate) processing. Query conditions are expressed in terms of columns. On the other hand, the step of result set materialization, i.e. constructing the result set rows is more expensive than in row stores. That poses a special challenge to Top-N query processing methods. Unnecessary row materializations have to be avoided at any cost.

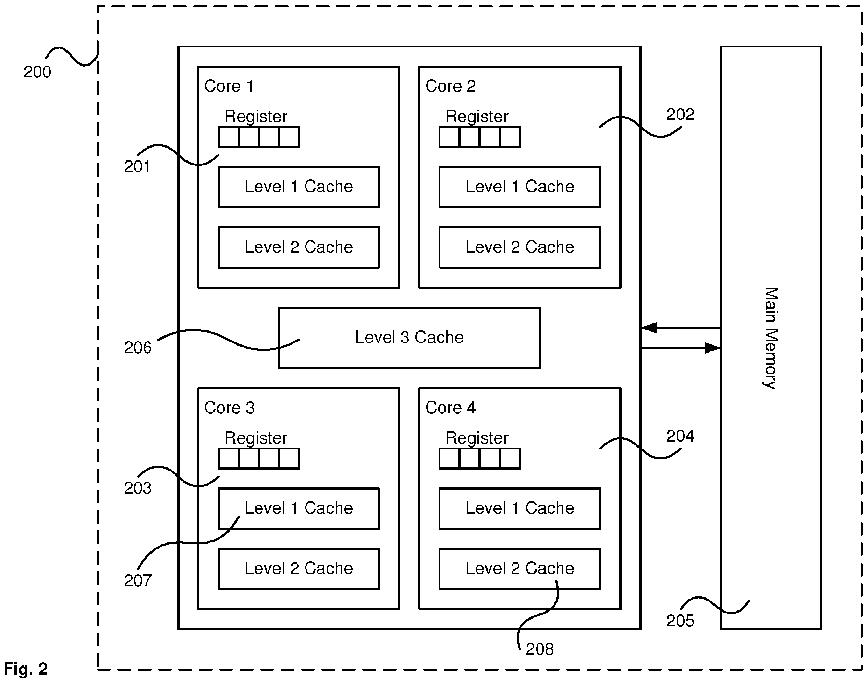

More challenges are posed by the modern memory architectures. Modern processors 200 employ multi cores 201, 202, 203, 204, main memory 205 and several levels of memory caches 206, 207, 208 as illustrated in Fig. 2. Current Top-N algorithms do not address the problems of data locality and cache-consciousness. That leads to frequent cache misses and inefficient execution. Additionally, processors are equipped with SIMD (single-instruction, multiple-data) hardware that allows performing so-called vectorized processing, that is, executing the same operation on a series of closely adjacent data.

In analytical data processing, Top-N queries are common. The efficiency of Top-N queries is of great importance because N can be usually much smaller than the size of the selection result set, and the Top-N optimization can make a great difference. Additionally, in column-store databases, unnecessary row materialization can be avoided (late materialization is required). Prior art methods are not optimal for column-store databases. Current Top-N algorithms do not address the problems of data locality and cache-consciousness leading to frequent cache misses and inefficient execution. Additionally, current Top-N methods are not optimal for implementation in SIMD.

A generic review of currently used techniques for efficiently answering Top-N queries is disclosed in (I. F. Ilyas, G. Beskales, M. A. Soliman, "A Survey of Top-k Query Processing Techniques in Relational Database Systems", ACM Computing Surveys 40 (4), 1-58, ISSN: 0360-0300, doi: 10.1145/1391729.1391730 (2008)).

### SUMMARY

It is the object of the invention to provide a technique for efficiently implementing Top-N data base queries.

This object is achieved by the features of the independent claims. Further implementation forms are apparent from the dependent claims, the description and the figures.

The invention is based on the idea that an approximate histogram is obtained with sampling of a subset of the result set. That histogram is used to evaluate an additional reducing filter that will retain approximately N rows of the result set to be sorted. This method is suited for partitioned tables, so that several parallel working threads can operate on the table partitions at the same time.

In order to describe the invention in detail, the following terms, abbreviations and notations will be used:
- SQL:: Structured Query Language.
- Top-N:: Top-N queries provide a method for limiting the number of rows returned from ordered sets of data.
- SIMD:: Single-Instruction, Multiple-Data.
- LIMIT N: limiting condition of a query

According to a first aspect, the invention relates to a method for reducing the cardinality of a selection result set of a database query to a given limit of a limiting condition based on values of a sort column of the database, the method comprising:
in each one of a plurality of threads operating in parallel on different partitions of a table of the database, applying the database query on an ordered set of data items comprising a columnar database by applying a logical expression of column values comparisons to filter columns of the columnar database to provide a partitioned selection result set; providing an approximate histogram of sort column values of the selection result set by randomly sampling over the sort column values of the selection result set; determining a histogram-based filter based on a plurality of ranges of the approximate histogram with respect to a filter condition; and applying the histogram-based filter to the selection result set to provide a partition of the reduced selection result set;
merging the respective partitions of the reduced selection result set providing a merged reduced selection result set; and
sorting the merged reduced selection result set, and applying the limiting condition to the outcome of the sorting to obtain a sort-limited merged reduced selection result set whose cardinality corresponds to the given limit.

If the sort-limited merged reduced selection result set has less than the cardinality corresponding to the given limit, the filter condition is modified in a way that more histogram ranges are taken into acount.

By providing the approximate histogram, determining a histogram-based filter and applying that histogram-based filter to the selection result set, Top-N data base queries are efficiently implemented. The method provides highly parallel processing and using of all available system resources. The limiting condition may be evaluated from a low-cost approximate histogram built dynamically on the sort column of the selection result set. The final selection may be evaluated by performing, in parallel, bit-wise operations on bitmaps, which yields to vectorized processing. The rows may be materialized in the last step of the method in order to save resources.

In a first possible implementation form of the method according to the first aspect, a number of elements of each range of the plurality of ranges is based on a limit of the limiting condition. When the number of elements of each range is based on the limit N of the limiting condition "LIMIT N", the top N values can be found within the highest value range.

In a second possible implementation form of the method according to the first aspect as such or according to the first implementation form of the first aspect, the approximate histogram is provided based on a random subset of the values of the selection result set.

When using a random subset of the values of the selection result set, the random subset represents an adequate sample subset of the selection result set. Further, the random subset can be smaller than the selection result set thereby saving memory and/or processing resources.

In a third possible implementation form of the method according to the first aspect as such or according to any of the preceding implementation forms of the first aspect, the filter condition comprises a comparison with a threshold value.

By using the threshold value a resolution of the HBF filter can be adjusted. The number of candidate rows used for reducing the selection result set can be adjusted.

In a fourth possible implementation form of the method according to the third implementation form of the first aspect, the threshold value is greater than a limit of the limiting condition, in particular one greater than the limit of the limiting condition.

When the threshold value is greater than a limit N of the limiting condition "LIMIT N" the number of candidate rows used for reducing the selection result set is increased resulting a higher precision.

In a fifth possible implementation form of the method according to the first aspect as such or according to any of the preceding implementation forms of the first aspect, the method comprises: determining a bitmap of the histogram-based filter based on the filter condition; determining a bitmap of the selection result set based on a predicate expression of the database query; applying the bitmap of the histogram-based filter to the bitmap of the selection result set to provide a reduced selection result set bitmap; and applying the reduced selection result set bitmap to the selection result set to provide the reduced selection result set.

When bitmaps are used the processing can be executed very fast as simple logical operations like bit-wise AND can be exploited.

In a sixth possible implementation form of the method according to the first aspect as such or according to any of the preceding implementation forms of the first aspect, the method comprises: sorting the reduced selection result set providing a sorted reduced selection result set; and limiting the sorted reduced selection result set with respect to a limit of the limiting condition.

Sorting the reduced selection result set is faster than sorting the (non-reduced) selection result set.

According to the first aspect as such or according to any of the preceding implementation forms of the first aspect, the method comprises: processing the steps of the method in parallel by a plurality of threads.

When the steps are processed in parallel by using a plurality of threads, the method can be efficiently applied in multi-core processor systems where different instances can be performed in parallel thereby reducing the processing time.

The selection result set comprises a partitioned selection result set and the plurality of threads operate on different partitions of the partitioned selection result set at the same time, each thread providing a respective partition of the reduced selection result set.

The method thus allows to partition the selection result set and to process the steps in parallel for each partition. Such technique is very efficient for implementing Top-N data base queries.

The method comprises: merging the respective partitions of the reduced selection result set providing a merged reduced selection result set; and sorting and limiting the merged reduced selection result set providing a sort-limited merged reduced selection result set.

By merging the respective partitions of the reduced selection result set, the merged reduced selection result set comprises all relevant data.

The method comprises: modifying the histogram-based filter based on the sort-limited merged reduced selection result set.

Because of the approximate nature of the histogram, it may happen that there are not enough rows to satisfy the Top N reduction. In such cases by modifying the histogram-based filter more histogram ranges can be taken into account.

In an further possible implementation form of the method according to the first aspect as such or according to any of the preceding implementation forms of the first aspect, the ordered set of data items comprises a columnar database.

The method thus can be applied to columnar databases. The method thus can be used in analytical databases thereby speeding up query condition (predicate) processing.

In a further possible implementation form of the method according to the eleventh implementation form of the first aspect, applying the database query comprises: applying a logical expression of column values comparisons to columns of the columnar database to provide the selection result set.

The logical expression of column values comparisons can be implemented very efficiently by using bitmaps.

In a further possible implementation form of the method according to the first aspect as such or according to any of the preceding implementation forms of the first aspect, the database query comprises one of the following SQL programming language expressions: a Top-N query, a Join query, a query comprising a limiting condition.

The method is applicable to a lot of expressions and efficiently processes these expressions.

The method according to the first aspect of the invention and its implementation forms may be applied to columnar databases. Efficient sequential columns scans may be used, utilizing data locality and vectorized processing. The method provides highly parallel processing and using of all available system resources. The Top-N reducing condition (filter) may be evaluated from low-cost approximate histogram built dynamically on the sort column of the selection result set. The final selection may be evaluated by performing, in parallel, bit-wise operations on bitmaps, which yields to vectorized processing too. The rows may be materialized in the last step of the method. The selection operation may be performed by scanning the columns and producing a bitmap representing the selected rows. A bitmap is a position index whereby a "1" indicates a position, in all column structures, of the column values corresponding to the selected row. The selection bitmap may be projected on the sort column. Then, an approximate histogram may be calculated on that subset of the column values. Based on the histogram, an additional reducing filter may be calculated. The sort column may be scanned with the filter, and an additional bitmap may be produced. That bitmap may be combined (e.g. by bitwise AND operation) with the previous bitmap, and a potential reduced result set may be produced. This result set is small and easy to sort. It may be finally sorted and limited to N.

According to a second aspect, the invention relates to a multi-core processor comprising: a partitioning circuit configured to partition an ordered set of data items into a plurality of partitions; and a plurality of processing cores, wherein each processing core is configured to execute the method according to the first aspect on a respective partition of the ordered set of data items providing a respective partition of the reduced selection result set.

When applying the method on a multi-core processor, the query can be executed very fast as a number of parallel cores can work on the query processing in parallel.

According to a third aspect, the invention relates to a computer program with program code for performing the method according to the first aspect as such or according to any of the implementation forms of the first aspect, when the computer program runs on a computer.

The computer program can be flexibly designed such that an update of the requirements is easy to achieve. The computer program product may run on a lot of different processors, processor cores and processor systems such as SIMD.

According to a fourth aspect, the invention relates to a computer program product comprising a readable storage medium storing program code thereon for use by a computer executing the method according to the first aspect as such or according to any of the implementation forms of the first aspect.

Aspects of the invention improve the efficiency of Top-N algorithms by a computing technique allowing the program to:
- reduce the data set to be sorted to reduce the time needed to sort;
- use sequential access to data instead of random to improve access locality and cache efficiency;
- reduce the amount of memory accessed randomly to reduce cache misses;
- reduce inter-dependency of data to parallelize the Top-N computing;
- use vectors of adjacent data items in computing to make use of SIMD; and
- reduce complexity of sort data reduction to reduce the cost of intermediate steps of Top-N computing.

### BRIEF DESCRIPTION OF THE DRAWINGS

Further embodiments of the invention will be described with respect to the following figures, in which:
Figs. 1a and 1b show schematic diagrams illustrating a row-store database 110 (Fig. 1a) and a column-store database 120 (Fig. 1b);
Fig. 2 shows a high-level block diagram illustrating a multi-core memory architecture 200;
Fig. 3 shows a schematic diagram illustrating a method 300 for executing a database query according to an implementation form;
Fig. 4 shows a schematic diagram illustrating execution of the first two steps S1 and S2 of the method 300 according to an implementation form;
Fig. 5 shows a schematic diagram illustrating execution of the third step S3 of the method 300 according to an implementation form;
Fig. 6 shows a schematic diagram illustrating execution of the fourth step S4 of the method 300 according to an implementation form;
Fig. 7 shows a schematic diagram illustrating execution of the fifth step S5 of the method 300 according to an implementation form;
Fig. 8 shows a schematic diagram illustrating execution of the sixth step S6 of the method 300 according to an implementation form;
Fig. 9 shows a schematic diagram illustrating execution of the seventh step S7 of the method 300 according to an implementation form; and
Fig. 10 shows a schematic diagram illustrating a method 1000 for reducing a selection result set of a database query according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

The devices and methods described herein may be based on database queries, in particular Top-N queries. It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The methods and devices described herein may be implemented in multi-core memory architectures, e.g. SIMD processor architectures. The described devices and systems may include software units and hardware units. The described devices and systems may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

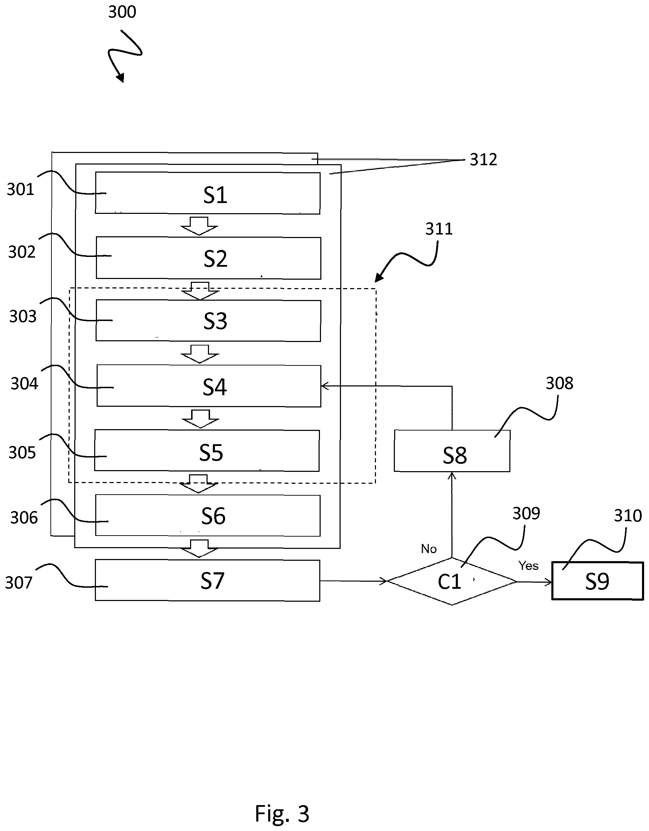

Fig. 2 shows a high-level block diagram illustrating a multi-core processor 200 which can be used to execute the methods as described below with respect to Figs. 3 to 9. The multi-core processor 200 includes a partitioning circuit (not shown in Fig. 2) that is configured to partition an ordered set of data items into a plurality of partitions. The multi-core processor 200 includes a plurality of processing cores 201, 202, 203, 204, wherein each processing core is configured to execute the methods as described below with respect to Figs. 3 to 9 on a respective partition of the ordered set of data items providing a respective partition of the reduced selection result set.

Fig. 3 shows a schematic diagram illustrating a method 300 for executing a database query according to an implementation form.

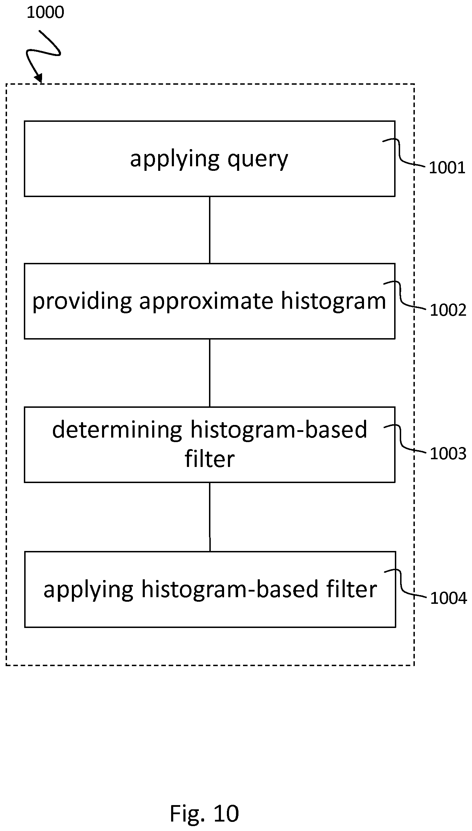

The method includes a first step S1 and a second step S2: applying 301, 302 the database query on an ordered set of data items based on a limiting condition to provide a selection result set. The method includes a third step S3: providing 303 an approximate histogram of values of the selection result set by randomly sampling over the values of the selection result set, a fourth step S4: determining 304 a histogram-based filter based on a plurality of ranges of the approximate histogram with respect to a filter condition; and a fifth step S5: applying 305 the histogram-based filter to the selection result set to provide a reduced selection result set. The steps S3, S4 and S5 define a method 311 for reducing a selection result set of a database query, e.g. as described below with respect to Fig. 10.

A number of elements of each range of the plurality of ranges may be based on a limit of the limiting condition as described below. The approximate histogram may be provided based on a random subset of the values of the selection result set as described below. The filter condition may include a comparison with a threshold value as described below. The threshold value may be greater than a limit of the limiting condition, in particular one greater than the limit of the limiting condition. The method 300 may include determining a bitmap of the histogram-based filter based on the filter condition; determining a bitmap of the selection result set based on a predicate expression of the database query; applying the bitmap of the histogram-based filter to the bitmap of the selection result set to provide a reduced selection result set bitmap; and applying the reduced selection result set bitmap to the selection result set to provide the reduced selection result set as described below. The method 300 may include sorting 306 (Step 6) the reduced selection result set providing a sorted reduced selection result set; and limiting the sorted reduced selection result set with respect to a limit of the limiting condition as described below. The method 300 may include processing the steps S1 to S6 of the method 300 in parallel by a plurality of parallel threads 312 as described below. The selection result set may include a partitioned selection result set and the plurality of threads 312 may operate on different partitions of the partitioned selection result set at the same time, each thread 312 providing a respective partition of the reduced selection result set. The method 300 may include merging 307 (Step 7) the respective partitions of the reduced selection result set providing a merged reduced selection result set; and sorting and limiting the merged reduced selection result set providing a sort-limited merged reduced selection result set as described below. The method 300 may include modifying 308 (Step 8) the histogram-based filter based on the sort-limited merged reduced selection result set as described below. The ordered set of data items may include a columnar database. Applying the database query may include applying a logical expression of column values comparisons to columns of the columnar database to provide the selection result set as described below. The database query may include a Top-N query, a Join query, a query comprising a limiting condition or another query to be executed by the method.

The method may be applied to execute a query, e.g. expressed in the SQL language, of the type:

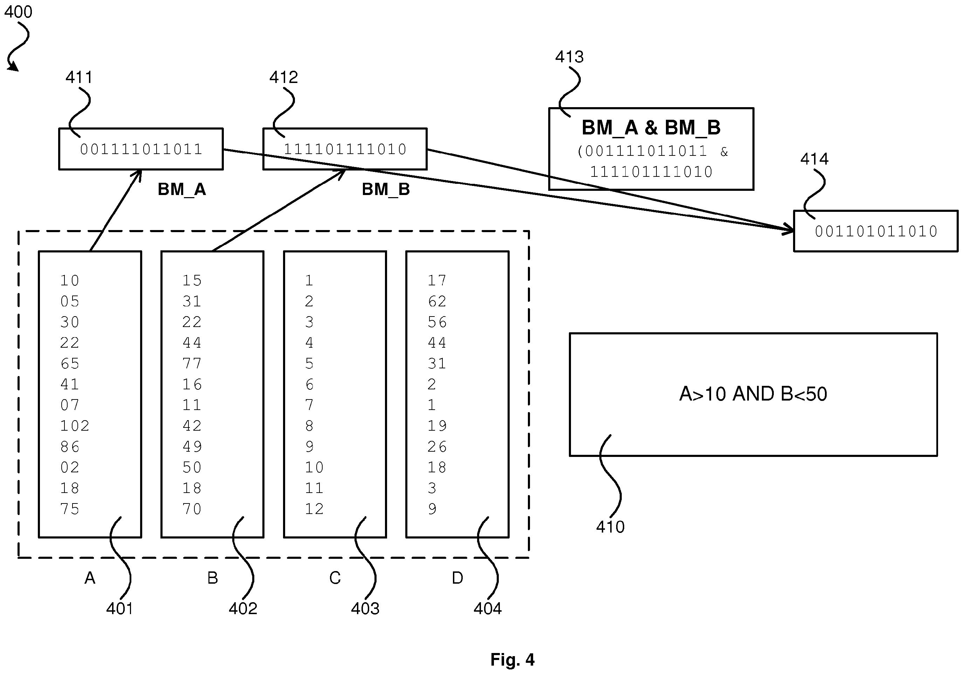

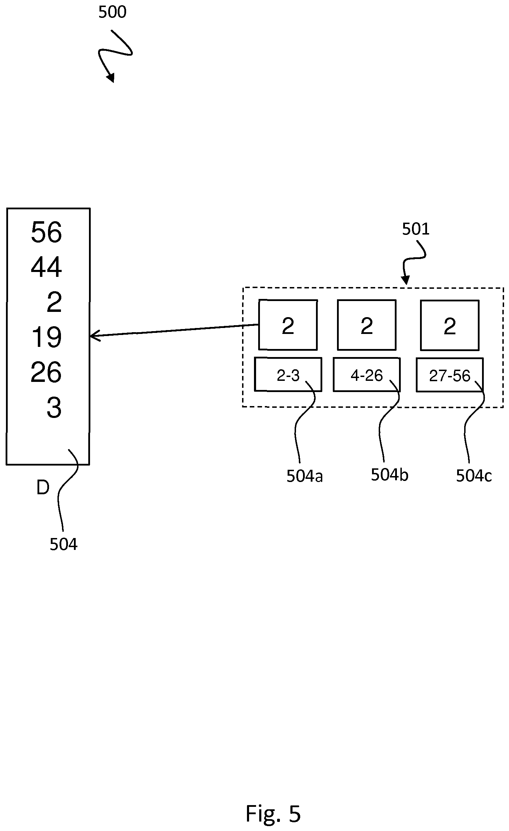

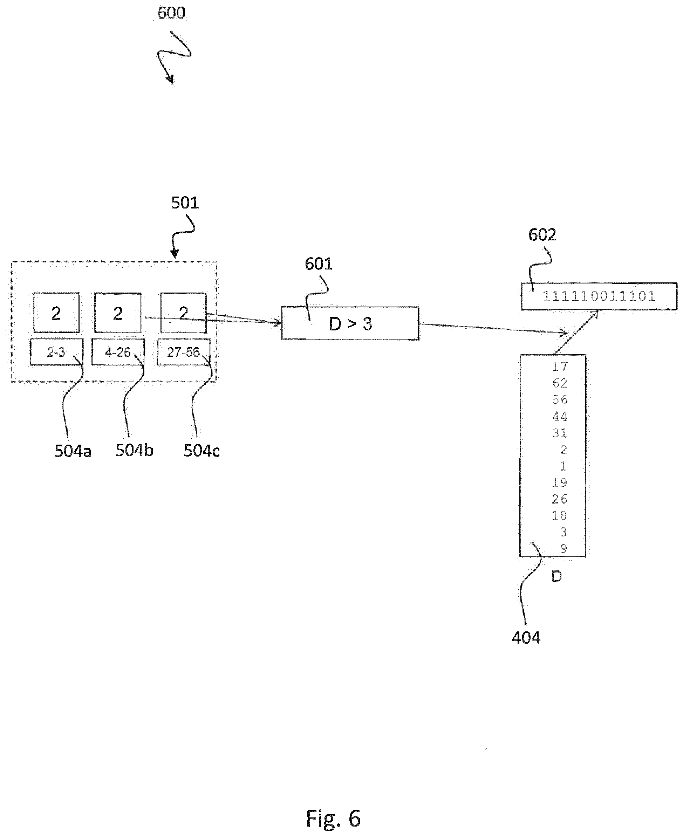

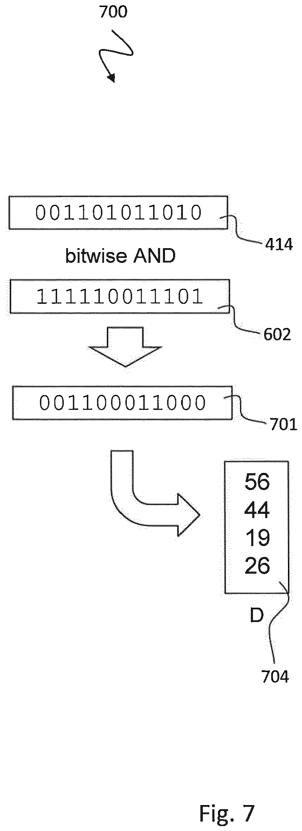

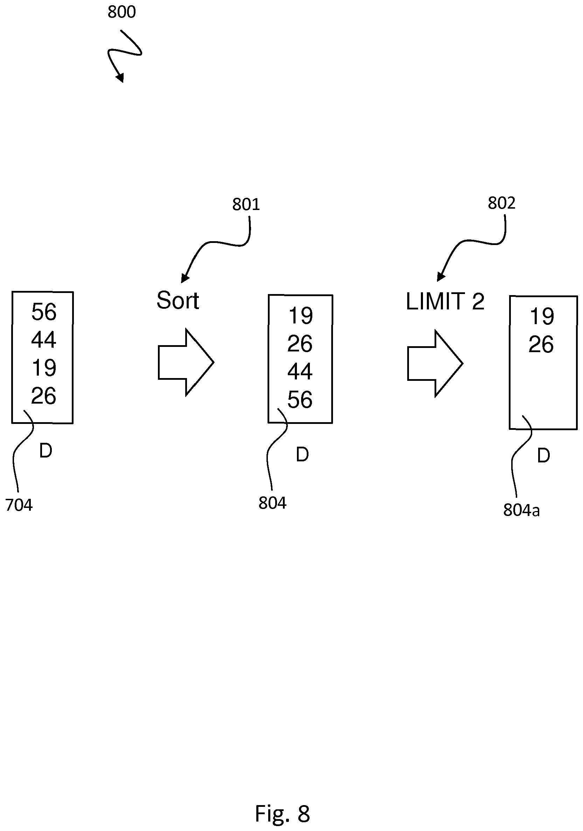

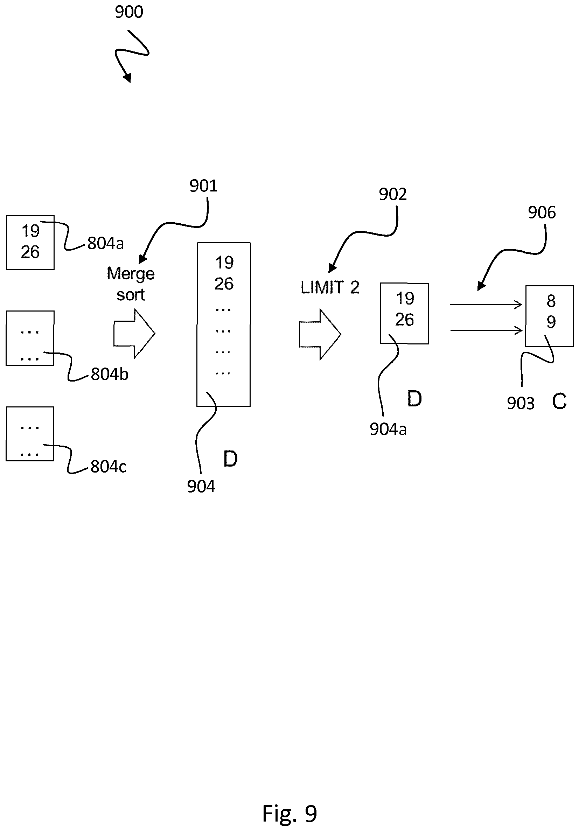

```
 SELECT <select list> from <table>
 WHERE <predicate>
 ORDER BY <sort columns> [ASC | DESC]
 LIMIT <n>,
```

where <predicate> is a logical expression of column values comparisons connected with AND, OR and NOT operators. When <predicate> is applied to <table>, the selection result set is produced. Conceptually, the selection result set is sorted in the way specified in the ORDER BY clause. The sorted result set is reduced to first <n> rows specified in the LIMIT clause that is also denoted as the limiting condition.

As shown in Fig. 3, the eight steps S1: "apply filter on filter columns and generate bitmap for each column", S2: "calculate selection result set bitmap", S3: "generate an approximate histogram on sort columns", S4: "apply the filter based on the histogram to the result set", S5: "calculate reduced selection result set bitmap", S6: "sort the reduced result set and limit", S7: "merge-sort and limit to N" and optionally S8: "modify filter" if condition C1 "N rows" is false may be performed to execute the query. Only if condition C1 is true, i.e. N rows are remaining, in a ninth step S9 the found rows are materialized.

The following is an example SQL query used in the detailed illustration of the method 300: SELECT c FROM t WHERE a>10 AND b<50 ORDER BY d LIMIT 2
The first two steps S1, S2 are illustrated in Fig. 4. The third step S3 is shown in Fig. 5. The fourth step S4 is shown in Fig. 6. The fifth step S5 is shown in Fig. 7. The sixth step S6 is shown in Fig. 8. The seventh step S7 is shown in Fig. 9.

Fig. 4 shows a schematic diagram illustrating execution of the first two steps S1 and S2 of the method 300 according to an implementation form.

Values of four columns, A 401, B 402, C 403 and D 404 are shown. Fig. 4 depicts values of a single partition of a table. Several partitions can exist. They may be processed in parallel by independent worker threads 312 as shown above with respect to Fig. 3. The following steps S1 to S6 may be executed in parallel in all working threads. In step S1, the column-specific elementary conditions may be applied, as filters, to each of the filter columns (A and B). Column-specific bitmaps, BM_A 411 and BM_B 412 are produced. A "1", in a bitmap corresponds to a row that satisfies the elementary condition 410.

In step S2, the column-specific bitmaps 411, 412 are used as operands in bit-wise logical operations corresponding to the Boolean operators in the query predicate. In this case, the operator is AND in the elementary condition 410 and thus, the bit-wise AND operation 413 is performed on the column-specific bitmaps 411, 412. The result is a bitmap 414 of the selection result. The operations of step S1 and S2 take advantage of the possibility to access the memory sequentially, and to use the SIMD hardware in filtering the columns and in performing bit-wise logical operations on bitmaps.

Fig. 5 shows a schematic diagram illustrating execution of the third step S3 of the method 300 according to an implementation form.

Step S3 is dedicated to the generation of an approximate histogram of the sort column D 504 of the selection result set that may correspond to the column D 404 shown in Fig. 4 on which the selection result bitmap 414 been applied. The selection result bitmap 414 produced in Step 2 indicates the rows that are part of the selection result set. These rows are randomly sampled on the part of the sort column D 504, and an approximate value histogram 501 is produced. It tells how many column values fall within each specified value interval. Only a small amount of values of the column D 504 needs to be sampled to obtain an approximate histogram. In this example, the histogram includes a first range 504a in which the values 2 and 3 fall, a second range 504b in which the values 19 and 26 fall and a third range 504c in which the values 44 and 56 fall.

Fig. 6 shows a schematic diagram illustrating execution of the fourth step S4 of the method 300 according to an implementation form.

In Step S4, the histogram 501 is used to calculate an additional filter on the sort column 404, the so called HBF (histogram-based filter) 601. Because N=2 in this example, the top two values can be found within the highest value range 504c. However, because the histogram is an approximate histogram, the next range 504b is taken too, as a safety margin. The chosen filter condition t corresponds to the two rightmost ranges 504c, 504b of the histogram 501. Precisely, the filter condition is D > 3. The histogram-based filter (HBF) condition 601 is applied to the full column D 404, by scanning. That produces a new bitmap 602 resulting from the HBF (HBF bitmap). That bitmap 602 indicates the rows that are potentially members of the reduced selection result set.

Fig. 7 shows a schematic diagram illustrating execution of the fifth step S5 of the method 300 according to an implementation form.

In Step S5, a bitwise AND operation is performed on the selection result bitmap 414 and the HBF bitmap 602. The result is the preliminary reduced selection result set bitmap 701. It indicates those rows of the selection results 704 that are likely to participate in the reduced result (Top 2). The set of those rows is also denoted as reduced selection result set 704.

Fig. 8 shows a schematic diagram illustrating execution of the sixth step S6 of the method 300 according to an implementation form.

In order to find Top 2 rows of this table partition, in Step S6, the rows of the selection results 704 processed in step S5 are sorted 801 resulting in a set of sorted rows of the selection results 804 which set 804 is reduced 802 to two rows resulting in a set of sorted and reduced rows of the selection results 804a.

Fig. 9 shows a schematic diagram illustrating execution of the seventh step S7 of the method 300 according to an implementation form.

As steps S1 to S6 were performed on each data partition of a table, the results need to be consolidated. This is done in Step S7, where the partition-specific reduced selection result sets 804a, 804b, 804c (on the sort column D) are sort-merged 901 to obtain a sort-merged reduced selection result set 904 and reduced 902 to obtain a further reduced sort-merged reduced selection result set 904a. The Step S8 generates 906 the corresponding values of the query result set, that is, the values of the projection column C 903 (Fig. 9). The column values of the same row are found by way of row IDs (in this example the values 8 and 9) associated with column values (in this example 19 and 26).

Because of the approximate nature of the histogram, it may happen that there are not enough rows (N) to satisfy the Top N reduction. In such cases an additional Step 8 may be taken, whereby the HBF condition 601 may be modified in a way that more histogram ranges 504a, 504b, 504c are taken into account. Subsequently, the steps S4 to S8 may be repeated with the modified HBF condition.

The method as described herein is not limited to the execution of a Top-N query. One example of the method 300 encompasses all queries having the LIMIT clause, or similar (the exact syntax may vary). One example is an implementation of a reduced join query, generally expressed, in the SQL language, as:

```
 SELECT <select list> FROM table_A JOIN table_B {JOIN table_C ...}
 WHERE <predicate> ORDER BY <sort columns> [ASC|DESC] LIMIT <n>
```

In this example, advantage is taken of the fact that, in the course of join processing in a column store, bitmaps may be produced representing joined rows of the participating tables. The bitmap of the table hosting the sort column may be used to produce an approximate histogram of the sort column (in the join result set). The following steps may be the same as in the example shown with respect to Figs. 3 to 9: a histogram-based filter HBF is calculated and the corresponding bitmap (HBF bitmap) is generated. The HBF bitmap is bitwise ANDed with other bitmaps, and only the satisfying rows are joined. The resulting potential reduced result set is sorted and reduced, to produce the query result.

Fig. 10 shows a schematic diagram illustrating a method 1000 for reducing a selection result set of a database query according to an implementation form.

The method 1000 includes applying 1001 the database query on an ordered set of data items based on a limiting condition to provide a selection result set. The applying 1001 may correspond to the first two steps S1, S2 described above with respect to Figs. 3 to 9. The method 1000 includes providing 1002 an approximate histogram of values of the selection result set by randomly sampling over the values of the selection result set. The providing 1002 may correspond to the third steps S3 described above with respect to Figs. 3 to 9. The method 1000 includes determining 1003 a histogram-based filter based on a plurality of ranges of the approximate histogram with respect to a filter condition. The determining 1003 may correspond to the fourth step S4 described above with respect to Figs. 3 to 9. The method 1000 includes applying 1004 the histogram-based filter to the selection result set to provide a reduced selection result set. The applying 1004 may correspond to the fifth step S5 described above with respect to Figs. 3 to 9.

The methods, systems and devices described herein may be implemented on multi-core memory architectures, e.g. SIMD processor systems. They may also be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional SIMD processor devices or in new hardware systems dedicated for processing the methods described herein.

The present disclosure also supports a computer program product including computer executable code or computer executable instructions that, when executed, causes at least one computer to execute the performing and computing steps described herein, in particular the method 300 as described above with respect to Figs. 3 to 9. Such a computer program product may include a readable storage medium storing program code thereon for use by a computer, the program code may perform the method 300 as described above with respect to Figs. 3 to 9.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A method (300, 1000) for reducing the cardinality of a selection result set of a database query to a given limit of a limiting condition based on values of a sort column of the database, the method comprising:
in each one of a plurality of threads (312) executing the following steps 301 to 306 in parallel on different partitions of a table of the database:
- applying (301, 302, 1001) the database query on an ordered set of data items (401, 402, 403, 404) comprising a columnar database by applying a logical expression of column values comparisons to filter columns of the columnar database to provide a selection result set (504), wherein the selection result set (504) comprises a partitioned selection result set and the plurality of threads (312) operate on different partitions of the partitioned selection result set at the same time, each thread providing a respective partition (804a, 804b, 804c) of a reduced selection result set;
- providing (303, 1002) an approximate histogram (501) of sort column values of the selection result set (504) by randomly sampling over the sort column values of the selection result set (504);
- determining (304, 1003) a histogram-based filter (602) based on a plurality of ranges (504a, 504b, 504c) of the approximate histogram (501) with respect to a filter condition (601), wherein the filter condition (601) comprises a comparison with a threshold value;
- applying (305, 1004) the histogram-based filter (602) to the selection result set (504) to provide a partition (804a, 804b, 804c) of the reduced selection result set (704); and
- sorting (306, 801) the reduced selection result set (704) providing a sorted reduced selection result set (804); and limiting (802) the sorted reduced selection result set (804) with respect to a limit of the limiting condition;
merging (307, 901) the respective partitions (804a, 804b, 804c) of the reduced selection result set (704) providing a merged reduced selection result set (904); and
sorting (901) the merged reduced selection result set (904), and applying (802, 902) the limiting condition to the outcome of the sorting (901) to obtain a sort-limited merged reduced selection result set (904a) whose cardinality corresponds to the given limit; and
if the sort-limited merged reduced selection result set (904a) has less than the cardinality corresponding to the given limit, modifying (308) the filter condition (601) in a way that more histogram ranges are taken into account.

2. The method (300) of claim 1,
wherein a number of elements of each range (504a, 504b, 504c) of the plurality of ranges is based on a limit of the limiting condition.

3. The method (300) of claim 1 or 2,
wherein the approximate histogram (501) is provided based on a random subset of the values of the selection result set (504).

4. The method (300) of claim 3,
wherein the threshold value is greater than a limit of the limiting condition, in particular one greater than the limit of the limiting condition.

5. The method (300) of one of the preceding claims, comprising:
determining a bitmap of the histogram-based filter (602) based on the filter condition (601);
determining a bitmap (414) of the selection result set (504) based on a predicate expression of the database query;
applying the bitmap of the histogram-based filter (602) to the bitmap (414) of the selection result set (504) to provide a reduced selection result set bitmap (701); and
applying the reduced selection result set bitmap (701) to the selection result set (504) to provide the reduced selection result set (704).

6. The method (300) of one of the preceding claims,
wherein the database query comprises one of the following SQL programming language expressions:
a Top-N query,
a Join query,
a query comprising a limiting condition.

7. A multi-core processor (200) comprising:
a partitioning circuit configured to partition an ordered set of data items into a plurality of partitions; and
a plurality of processing cores (201, 202, 203, 204), wherein each processing core is configured to execute the method according to any of claims 1 to 6 on a respective partition of the ordered set of data items providing a respective partition of the reduced selection result set.

8. A computer program with program code for performing the method (300) according to any of claims 1 to 6, when the computer program runs on a computer.

## Patentansprüche

1. Verfahren (300, 1000) zur Reduzierung der Kardinalität eines Auswahlergebnissatzes einer Datenbankabfrage auf eine gegebene Grenze einer Begrenzungsbedingung basierend auf Werten einer Sortierspalte der Datenbank, wobei das Verfahren umfasst:
in jedem von mehreren Threads (312), Ausführen der folgenden Schritte 301 bis 306 parallel an verschiedenen Partitionen einer Tabelle der Datenbank:
- Anwenden (301, 302, 1001) der Datenbankabfrage auf einen geordneten Satz von Datenelementen (401, 402, 403, 404), die eine spaltenorientierte Datenbank umfassen, durch Anwenden eines logischen Ausdrucks von Spaltenwertvergleichen, um Spalten der spaltenorientierten Datenbank zu filtern, um einen Auswahlergebnissatz (504) bereitzustellen, wobei der Auswahlergebnissatz (504) einen partitionierten Auswahlergebnissatz umfasst und die mehreren Threads (312) auf verschiedenen Partitionen des partitionierten Auswahlergebnissatzes gleichzeitig operieren, wobei jeder Thread eine entsprechendes Partition (804a, 804b, 804c) eines reduzierten Auswahlergebnissatzes bereitstellt;
- Bereitstellen (303, 1002) eines Näherungshistogramms (501) von Sortierspaltenwerten des Auswahlergebnissatzes (504) durch zufälliges Abtasten der Sortierspaltenwerte des Auswahlergebnissatzes (504);
- Bestimmen (304, 1003) eines histogrammbasierten Filters (602) basierend auf mehreren Bereichen (504a, 504b, 504c) des Näherungshistogramms (501) in Bezug auf eine Filterbedingung (601), wobei die Filterbedingung (601) einen Vergleich mit einem Schwellenwert umfasst;
- Anwenden (305, 1004) des histogrammbasierten Filters (602) auf den Auswahlergebnissatz (504), um eine Partition (804a, 804b, 804c) des reduzierten Auswahlergebnissatzes (704) bereitzustellen; und
- Sortieren (306, 801) des reduzierten Auswahlergebnissatzes (704), wodurch ein sortierter reduzierter Auswahlergebnissatz (804) bereitgestellt wird; und Begrenzen (802) des sortierten reduzierten Auswahlergebnissatzes (804) in Bezug auf eine Grenze der Begrenzungsbedingung;
Zusammenführen (307, 901) der jeweiligen Partitionen (804a, 804b, 804c) des reduzierten Auswahlergebnissatzes (704), wodurch ein zusammengeführter reduzierter Auswahlergebnissatz (904) bereitgestellt wird; und
Sortieren (901) des zusammengeführten reduzierten Auswahlergebnissatzes (904) und Anwenden (802, 902) der Begrenzungsbedingung auf das Ergebnis der Sortierung (901), um einen sortiert-begrenzten zusammengeführten reduzierten Auswahlergebnissatz (904a) zu erhalten, dessen Kardinalität der gegebenen Grenze entspricht; und
wenn der sortiert-begrenzte zusammengeführte reduzierte Auswahlergebnissatz (904a) weniger als die Kardinalität, die der gegebenen Grenze entspricht, hat, Ändern (308) der Filterbedingung (601) auf eine Weise, dass mehr Histogrammbereiche berücksichtigt werden.

2. Verfahren (300) nach Anspruch 1,
wobei eine Anzahl von Elementen jedes Bereichs (504a, 504b, 504c) der mehreren Bereiche auf einer Grenze der Begrenzungsbedingung basiert.

3. Verfahren (300) nach Anspruch 1 oder 2,
wobei das Näherungshistogramm (501) basierend auf einer zufälligen Teilmenge der Werte des Auswahlergebnissatzes (504) bereitgestellt wird.

4. Verfahren (300) nach Anspruch 3,
wobei der Schwellenwert größer ist als eine Grenze der Grenzbedingung, insbesondere eine, die größer als die Grenze der Grenzbedingung ist.

5. Verfahren (300) nach einem der vorhergehenden Ansprüche, umfassend:
Bestimmen einer Bitmap des histogrammbasierten Filters (602) basierend auf der Filterbedingung (601);
Bestimmen einer Bitmap (414) des Auswahlergebnissatzes (504) basierend auf einem Prädikatsausdruck der Datenbankabfrage;
Anwenden der Bitmap des histogrammbasierten Filters (602) auf die Bitmap (414) des Auswahlergebnissatzes (504), um eine reduzierte Auswahlergebnissatz-Bitmap (701) bereitzustellen; und
Anwenden der reduzierten Auswahlergebnissatz-Bitmap (701) auf den Auswahlergebnissatz (504), um den reduzierten Auswahlergebnissatz (704) bereitzustellen.

6. Verfahren (300) nach einem der vorhergehenden Ansprüche,
wobei die Datenbankabfrage einen der folgenden Ausdrücke einer SQL-Programmiersprache umfasst:
eine Top-N-Abfrage,
eine Join-Abfrage,
eine Abfrage, die eine Begrenzungsbedingung umfasst.

7. Mehrkemprozessor (200), umfassend:
eine Partitionsschaltung, die konfiguriert ist, einen geordneten Satz von Datenelementen in mehrere Partitionen aufzuteilen; und
mehrere Verarbeitungskerne (201, 202, 203, 204), wobei jeder Verarbeitungskern konfiguriert ist, das Verfahren gemäß einem der Ansprüche 1 bis 6 an einer jeweiligen Partition des geordneten Satzes von Datenelementen auszuführen, wodurch eine jeweilige Partition des reduzierten Auswahlergebnissatzes bereitgestellt wird.

8. Computerprogramm mit Programmcode zur Durchführung des Verfahrens (300) nach einem der Ansprüche 1 bis 6, wenn das Computerprogramm auf einem Computer läuft.

## Revendications

1. Procédé (300, 1000) pour réduire la cardinalité d'un ensemble de résultats de sélection d'une requête de base de données à une limite donnée d'une condition de limitation en se basant sur des valeurs d'une colonne de tri de la base de données, le procédé consistant :
dans chaque fil d'une pluralité de fils (312) à exécuter les étapes 301 à 306 suivantes en parallèle sur différentes partitions d'une table de base de données :
- appliquer (301, 302, 1001) la requête de base de données sur un ensemble ordonné d'éléments de données (401, 402, 403, 404) comprenant une base de données en forme de colonne en appliquant une expression logique de comparaisons de valeurs de colonne pour filtrer des colonnes de la base de données en forme de colonne pour fournir un ensemble de résultats de sélection (504), dans lequel l'ensemble de résultats de sélection (504) comprend un ensemble de résultats de sélection partitionné et la pluralité de fils (312) agissent sur différentes partitions de l'ensemble de résultats de sélection partitionné au même moment, chaque fil fournissant une partition respective (804a, 804b, 804c) d'un ensemble de résultats de sélection réduit ;
- fournir (303, 1002) un histogramme approximatif (501) de valeurs de colonne de tri de l'ensemble de résultats de sélection (504) en effectuant de manière aléatoire un échantillonnage sur les valeurs de colonne de tri de l'ensemble de résultats de sélection (504) ;
- déterminer (304, 1003) un filtre basé sur un histogramme (602) sur la base d'une pluralité de plages (504a, 504b, 504c) de l'histogramme approximatif (501) par rapport à une condition de filtrage (601), la condition de filtrage (601) comprenant une comparaison avec une valeur de seuil ;
- appliquer (305, 1004) le filtre basé sur un histogramme (602) à l'ensemble de résultats de sélection (504) pour fournir une partition (804a, 804b, 804c) de l'ensemble de résultats de sélection réduit (704) ; et
- trier (306, 801) l'ensemble de résultats de sélection réduit (704) fournissant un ensemble de résultats de sélection réduit trié (804) ; et limiter (802) l'ensemble de résultats de sélection réduit trié (804) par rapport à une limite de la condition de limitation ;
à fusionner (307, 901) les partitions respectives (804a, 804b, 804c) de l'ensemble de résultats de sélection réduit (704) fournissant un ensemble de résultats de sélection réduit fusionné (904) ; et
à trier (901) l'ensemble de résultats de sélection réduit fusionné (904) et à appliquer (802, 902) la condition de limitation au résultat du tri (901) pour obtenir un ensemble de résultats de sélection réduit fusionné limité par le tri (904a) dont une cardinalité correspond à la limite donnée ; et
si l'ensemble de résultats de sélection fusionné limité par le tri (904a) est inférieur à la cardinalité correspondant à la limite donnée, à modifier (308) la condition de filtrage (601) de telle manière que davantage de plages d'histogramme soient prises en compte.

2. Procédé (300) selon la revendication 1,
dans lequel un nombre d'éléments de chaque plage (504a, 504b, 504c) de la pluralité de plages est basé sur une limite de la condition de limitation.

3. Procédé (300) selon la revendication 1 ou 2,
dans lequel l'histogramme approximatif (501) est fourni en se basant sur un sous-ensemble aléatoire de valeurs de l'ensemble de résultats de sélection (504).

4. Procédé (300) selon la revendication 3,
dans lequel la valeur de seuil est supérieure à une limite de la condition de limitation, en particulier une valeur de seuil supérieure à la limite de la condition de limitation.

5. Procédé (300) selon l'une des revendications précédentes, consistant :
à déterminer une table de bits du filtre basé sur un histogramme (602) en se basant sur la condition de filtrage (601) ;
à déterminer une table de bits (414) de l'ensemble de résultats de sélection (504) en se basant sur une expression prédicative de la requête de base de données ;
à appliquer la table de bits du filtre basé sur un histogramme (602) à la table de bits (414) de l'ensemble de résultats de sélection (504) pour fournir une table de bits d'ensemble de résultats de sélection réduit (701) ; et
à appliquer la table de bits d'ensemble de résultats de sélection réduit (701) à l'ensemble de résultats de sélection (504) pour fournir l'ensemble de résultats de sélection réduit (704).

6. Procédé (300) selon l'une des revendications précédentes,
dans lequel une requête de base de données comprend l'une des expressions de langage de programmation SQL suivantes :
une requête avec un Top N,
une requête de jointure,
une requête comprenant une condition de limitation.

7. Processeur multicoeur (200) comprenant :
un circuit de partitionnement configuré pour partitionner un ensemble ordonné d'éléments de données en une pluralité de partitions ; et
une pluralité de coeurs de traitement (201, 202, 203, 204), dans lequel chaque coeur de traitement est configuré pour exécuter le procédé selon l'une quelconque des revendications 1 à 6 sur une partition respective de l'ensemble ordonné d'éléments de données fournissant une partition respective de l'ensemble de résultats de sélection réduit.

8. Programme d'ordinateur ayant un code de programme pour réaliser le procédé (300) selon l'une quelconque des revendications 1 à 6, lorsque le programme d'ordinateur s'exécute sur un ordinateur.
